(19) Europäisches Patentamt / European Patent Office / Office européen des brevets

(11) **EP 3 306 802 B1**

(12) **EUROPEAN PATENT SPECIFICATION**

(45) Date of publication and mention
of the grant of the patent:
**04.12.2019 Bulletin 2019/49**

(51) Int Cl.:
**H02N 2/18** *(2006.01)*

(21) Application number: **16306338.1**

(22) Date of filing: **10.10.2016**

(54) **SYNCHRONOUS CONTROLLING METHOD FOR INTERFACE AND OPTIMIZATION OF A PIEZOELECTRIC ENERGY HARVESTING DEVICE, CONTROLLING CIRCUIT AND INTERFACE CIRCUIT**

SYNCHRONES STEUERVERFAHREN FÜR SCHNITTSTELLE UND OPTIMIERUNG EINER PIEZOELEKTRISCHEN ENERGIEGEWINNUNGSVORRICHTUNG, STEUERSCHALTUNG UND SCHNITTSTELLENSCHALTUNG

PROCÉDÉ DE COMMANDE SYNCHRONIQUE POUR L'INTERFACE ET OPTIMISATION D'UN DISPOSITIF DE RÉCOLTE D'ÉNERGIE PIEZOÉLECTRIQUE, CIRCUIT DE COMMANDE ET CIRCUIT D'INTERFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018 Bulletin 2018/15**

(73) Proprietors:
• **Université Paris-Sud**
**91400 Orsay (FR)**
• **CENTRE NATIONAL DE LA RECHERCHE SCIENTIFIQUE**
**75016 Paris (FR)**
• **Korea Electronics Technology Institute Gyeonggi-do 463-816 (KR)**

(72) Inventors:
• **LEFEUVRE, Elie**
**93100 MONTREUIL (FR)**
• **BADEL, Adrien**
**73340 LESCHERAINES (FR)**
• **YOO, Chan Sei**
**14063 ANYANG-SI (KR)**

(74) Representative: **IPAZ**
**Parc Les Algorithmes, Bâtiment Platon CS 70003 Saint-Aubin**
**91192 Gif-sur-Yvette Cedex (FR)**

(56) References cited:
**EP-A1- 3 035 521    DE-A1-102013 105 585**
**FR-A1- 2 854 006**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Invention pertains to an electronic circuit that performs the function of interfacing a piezoelectric generator with an electrical load or a component for storing an electrical energy by this generator.

It discloses an improved method for controlling the switch of a Synchronous Electric Charge Extraction harvesting circuit, where the stage of discharging the piezoelectric branch toward the output branch is triggered at an instant t1' different from the instant of the maximum piezoelectric voltage $V_M$ and/or displacement X.

Invention also discloses a method for optimizing, possibly in real-time, the control parameters of a SECE method in function of a mismatch between the actual excitation frequency of the piezoelectric generator and its natural mechanical frequency. This method applies to SECE method such phase shifting only, or with anticipated interruption t2' only, or with both of them.

Invention also discloses a device implementing such a synchronization method, enabling a particularly simple, efficient and robust operation.

**Background**

Electronic devices or devices comprising an electronic part are known, which are to operate autonomously during an extended duration without connection to an external electrical energy, or at least longer than would be enabled by the energy initially stored onboard.

Such a device may be a low consumer long term device to be implanted in a human or animal body, where it is difficult to provide an electrical charging connection. It may also pertain to measure or detection sensors with wireless communication, to be dispatched in extended areas, such as radio receivers or environment sensors. Other devices are relevant, such as wearable devices or smart clothes, or monitoring device, or a positioning beacon.

As an electrical supply for such devices, it is known to provide energy harvester devices for extracting electrical energy from a local mechanical energy that is available under an alternative form, such as vibrations or pressure variations in a fluid or repeated mechanical deformations.

Such mechanical energy may be harvested through different kinds of converters, also called transducers.

Electromagnetic transduction is known, but is difficult to miniaturize and may have incompatibilities, for examples as with medical imaging technologies such as Magnetic Resonance Imaging.

Electrostatic transduction uses charges and discharges created by a displacement or deformation, like a variable capacity condenser. Though miniaturization is possible, complex electronics are needed for managing charging and discharging stages of transducers.

Piezoelectric transduction uses efforts or deformations of a material with piezoelectric properties, which directly convert such electromechanical energy into electrical energy. This kind of transduction is well suited to miniaturization.

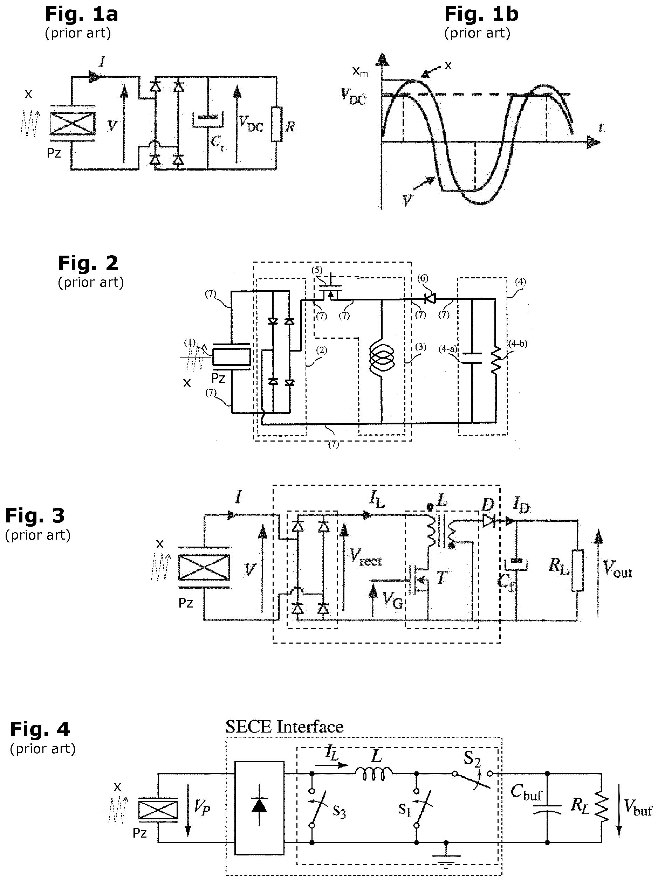

FIGURE 1a shows an example of a known circuit for harvesting electrical energy from a piezoelectric transducer Pz, when deformed by an alternative displacement X. Interface circuit comprises a diodes bridge that receives an alternative input voltage V from the transducer, et converts it into a direct current for charging an accumulator Cr under voltage $V_{DC}$. FIGURE 1b shows, according to time t, the curve of piezoelectric voltage V, superposed with the curve of displacement X. As soon as piezo voltage V exceeds voltage $V_{DC}$ of the accumulator, in the flat part of the V curve, further electrical energy is stored into the accumulator Cr.

Efficiency of this kind of harvester has been improved by using a circuit which is electronically controlled in synchronous manner, in a technology called SECE for Synchronous Electric Charge Extraction. This technology is disclosed in document FR 2 854 006, with a circuit shown in FIGURE 2, in which an inductor 3 is connected in parallel between the diodes bridge 2 and the storage component 4. Inductor 3 is charged from the bridge 2, through a controlled electronic switch 5 such as a transistor, when said switch is closed. When switch is opened, inductor discharge into the storage component through a rectifier diode 6.

FIGURE 3 shows another circuit working with the same principle for charging a storage component Cf, with the same kind of SECE synchronous controlling method, as disclosed in paper from Lefeuvre et al., "piezoelectric "energy harvesting device optimization by synchronous electric charge extraction", in Journal of Intelligent Material Systems and Structures, Vol. 16, N°10, 865-876, 2005. In this interface, inductor is a coupled inductor L producing a voltage transformer. Electronic switch T is controlled by a voltage signal $V_G$ and is disposed in series in the same branch as the primary winding of coupled inductor L.

FIGURE 4 shows still another kind of interface circuit using SECE, disclosed in the book from Thorsten Hehn, "CMOS Circuits for Piezoelectric Energy Harvesters", Springer Series in Advanced Microelectronics, Volume 38 2015. In this interface, inductor L is arranged in series between diodes bridge end storage component Cbuf. One switch S2 is connected in series with inductor L. Two switches S1 and S3 are connected in parallel with the diodes bridge, one on each side of the inductor L.

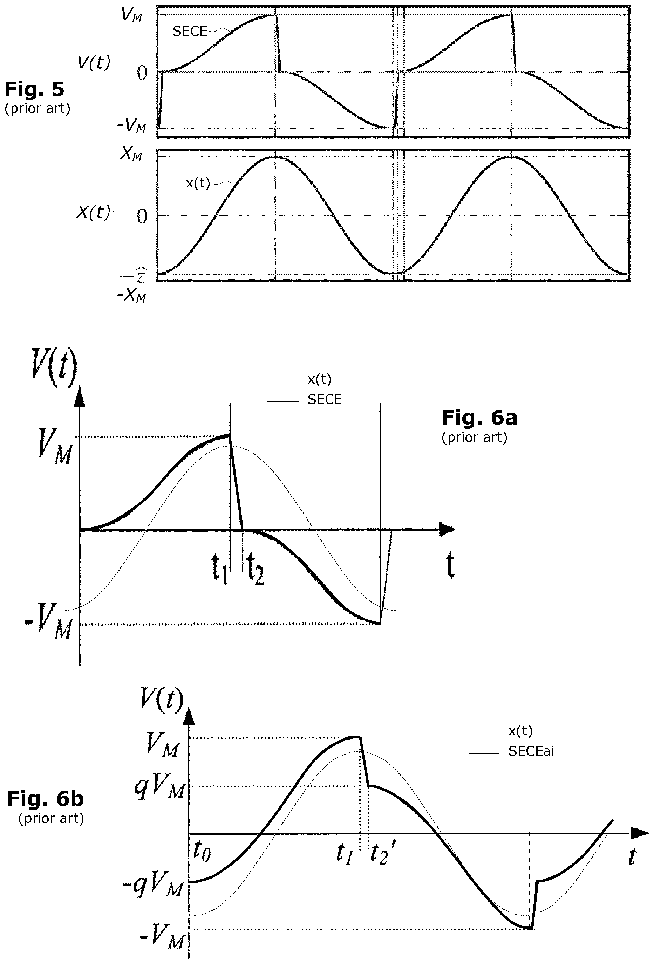

Such a synchronized control technology SECE is illustrated in FIGURE 5, where the top curve shows the variations of piezo voltage V(t), and the bottom curve shows the concurrent displacement X(t) within the piezoelectric generator. Control switch (or switches) is synchronized with the absolute maxima $V_M$ and - $V_M$ of piezo voltage V.

As detailed in FIGURE 6a, with reference to FIGURE 3, switch T is commanded to be kept open while piezo voltage V(t) is rising and electrical energy is stored in inductor L. When maximum piezoelectric voltage $V_M$ is detected by a peak detector, at time t1, switch T is closed so as to allow electrical energy to leave inductor L as current $I_D$ toward storage component Cf. When inductor L is discharged and voltage V reaches zero, as detected by a zero crossing detector at time t2, switch T is opened anew and absolute value of voltage V start rising again, until the next maxima -$V_M$.

Document DE 10 2013 105 585 proposed a variant of the SECE interface control method, applied to the kind of circuit illustrated in FIGURE 2. As illustrated in FIGURE 6b, this document discloses to command an anticipated interruption of discharge phase at a time t2', before voltage V reaches zero, when voltage V(t) reaches a value q.$V_M$ that is a fraction of maximum voltage $V_M$. However, such a control method enables to retrieve only a fraction of the total mechanical power involved.

A similar method is shown in EP 3 035 521 A1.

However, as the interface of prior art does not harvest 100% of the mechanical power received, it is still useful to optimize this efficiency.

Thus, it is an object of the invention to improve the efficiency of a such a piezo power harvester, while maintaining or improving the technical constraints for implementing, using or manufacturing such a device.

### Disclosure of the invention

All or part of such object is reached, according to the invention, by a method or device comprising the features recited in the claims, which are included in the technical teaching here provided in relation to the invention.

According to particularities of the invention, such method is applied to a device that comprises a circuitry as known in the prior art, such as in the documents cited here above.

### Phase shifting transfer time

Inventors found that, in an interface that is originally designed to work according to the SECE method, possibly such as known in the prior art, it may be advantageous trigger the stage of discharging is at a transfer time which is in offset from the peak time by a given non-zero phase shift.

Thus, according to a first aspect of the invention, it is proposed a method for controlling an interface circuit within an energy harvesting device, wherein:

said energy harvesting device comprises at least one piezoelectric generator arranged for receiving a cyclic mechanical energy and convert it into a cyclic electrical converted energy,
said interface circuit is operatively connected for receiving said electrical converted energy as a cyclic input voltage and for extracting at least part of energy as an output voltage adapted for storage into a storage circuit,
said interface circuit comprising at least one inductor and at least one electronic switch controlled by a control circuitry so as to alternatively trigger, when successively changing its state:

- a stage of charging the inductor from the piezo generator, and
- a stage of discharging the inductor toward the storage circuit.

Such method comprises controlling said electronic switch so as to trigger the discharge stage in a synchronized manner which is calculated according to a peak time, at which a maximum value is reached by the absolute value of input voltage), or of the piezo generator's displacement), or of the electrical converted energy produced by the piezo generator

According to this first aspect of the invention, said method is characterized in that the stage of discharging is triggered at a transfer time which is in offset from the peak time by a given non-zero phase shift.

As found by the inventors and exemplified here after, such method enables to harvest energy from a piezoelectric generator with an improved efficiency. Surprisingly, they found that such feature furthermore enables the system to work in a wider frequency band of mechanical excitation for a given efficiency.

Advantageous particularities are proposed that are recited it the appended claims or exposed in the present specification.

According to one of such particularities, such method advantageously comprises the feature that the stage of discharging is triggered at an anticipated time which takes place before a zero-crossing time at which the input voltage) crosses zero volt. Possibly but non mandatorily, such feature may be implemented as known in the prior art such as in document DE 10 2013 105 585.

**Optimizing SECE according to the resonance mismatch**

Further, inventors also found that, in an interface that is originally designed to work according to the SECE method, it may be advantageous to adjust the parameters of such controlling method, according to the difference between the mechanical resonance frequency of the piezoelectric generator and the frequency at which this generator is actual excited.

As found by the inventors and exemplified here after, such method enables to optimize efficiency in energy harvesting even when the generator is not mechanically excited at its optimal frequency, and thus provides a more stable and robust result.

This feature enables the interface circuit to follow the optimal working point of the system, for which a maximal electrical power is produced, along a working duration where the generator is excited at a frequency that differs from its mechanical resonance frequency, even when its frequency is not constant.

Thus, it is proposed a method as exposed here above wherein the value of the phase shift is calculated according to a value of the difference between the frequency of an actual cyclic excitation received by the piezo generator and the natural mechanical frequency of said piezoelectric generator.

Also, independently from the transfer time phase shifting method, inventors found that such parameter adjustment may be advantageous when applied to the anticipated interruption time, e.g. such as disclosed in the prior art in document DE 10 2013 105 585, even when transfer time is actually triggered at the peak of the piezoelectric voltage, i.e. without any phase shifting of transfer time.

Thus, in a second aspect independent from the first aspect, it is also proposed an optimized anticipated SECE method for controlling an interface circuit within an energy harvesting circuit, wherein

said energy harvesting circuit comprises at least one piezoelectric generator arranged for receiving a cyclic mechanical energy and convert it into a cyclic electrical converted energy,

said interface circuit is operatively connected for receiving said electrical converted energy as a cyclic input voltage and for extracting at least part of it as an output voltage adapted for storage into a storage circuitry,

said interface circuit comprising at least one inductor and at least one electronic switch controlled by a control circuitry so as to alternatively trigger, when successively changing its state:

- a stage of charging the inductor from the piezo generator, and
- a stage of discharging the inductor toward the storage circuit.

Such method comprises controlling said electronic switch so as to:

- trigger the discharge stage in a synchronized manner which is calculated according to a peak time, at which a maximum value is reached by the absolute value of input voltage), or of the piezo generator's displacement), or of the electrical converted energy produced by the piezo generator; and
- trigger the stage of discharging at an anticipated time which takes place before a zero-crossing time at which the input voltage) crosses zero volt, said anticipated time being chosen as the time at which the input voltage) reaches an interruption voltage defined as a given fraction of the maximum value of said input voltage.

According to this second aspect, such an optimized anticipated SECE is characterized in that the anticipated time is calculated according to a value of the difference between the frequency of an actual cyclic excitation received by the piezo generator and the natural mechanical frequency of said piezo generator.

**Interface circuitry**

According the invention, it is also proposed a device comprising an interface circuit within or for an energy harvesting device that comprises at least one piezoelectric generator arranged for receiving a cyclic mechanical energy and convert it into a cyclic electrical converted energy,

said interface circuit being arranged for receiving said electrical converted energy as a cyclic input voltage and for extracting at least part of said energy as an output voltage adapted for storage into a storage circuitry,

said interface circuit comprising at least one inductor and at least one electronic switch controlled by a control circuitry so as to alternatively trigger, when successively changing its state:

- a stage of charging the inductor from the piezo generator, and
- a stage of discharging the inductor toward the storage circuit;

wherein said control circuitry is arranged, hardwired and/or soft wired, for controlling said electronic switch so as to

trigger the discharge stage in a synchronized manner which is calculated according to a peak time, at which a maximum value is reached by the absolute value of input voltage), or of the piezo generator's displacement), or of the electrical converted energy produced by the piezo generator.

According to the invention, said device is characterized in that said control circuitry is arranged, hardwired and/or soft wired, for implementing a method as exposed herein, according to the first aspect or to the second aspect.

## Examples of advantages

Invention thus enables to optimize the electrical energy produced by a piezoelectric generator, for a direct consumption and/or for a storage in a intermediary storage device for a subsequent consumption, such as an accumulator, or a capacitor or a super-capacitor.

It enables an interface circuit to produce a better optimization between the electric quantities at output of the piezoelectric generator(s) and the electrical properties of the supplied load or storage device, in a simple and efficient manner.

When compared with the prior art, invention enables a better trade-off for a low consumption and/or a good robustness and/or a high efficiency and/or a wide efficiency range, especially in terms of frequency bandwidth.

Particularly, it enables a better adaptability to the diversity of characteristics of the various piezoelectric generators, so as to better exploit them while preserving robustness and simplicity of implementation.

Various embodiments of the invention are intended, which include the optional features here exposed according to all of their compatible combinations.

## List of the drawings

Other advantages and features will become apparent on examination of the detailed description of three examples that are in no way limitative, and the attached drawings, in which:

- FIGURE 1a and b illustrate an example of prior art of piezo energy harvester, showing a schematic representation and respectively a graph with curves of generator displacement and piezo electric voltage ;
- FIGURE 2 is a schematic representation showing a circuit with a parallel inductor and one controlled switch, implementing a SECE controlling method according to the prior art;
- FIGURE 3 is a schematic representation showing a circuit with a parallel coupled inductor and one controlled switch, implementing a SECE controlling method according to an example of prior art;
- FIGURE 4 is a schematic representation showing a circuit with an inductor in series and three controlled switches, implementing a SECE controlling method according to the prior art;
- FIGURE 5 is a schematic graph that illustrates a SECE controlling method according to the prior art, on top with the curve of input voltage and respectively on bottom with the curve of displacement of piezoelectric generator;
- FIGURE 6 is a schematic graph that illustrates comparatively:

  ∘ in FIGURE 6a, the SECE controlling method of FIGURE 5, superposed with the displacement of piezo generator, and
  ∘ in FIGURE 6b, a variant of a SECE controlling method, according to another prior art;

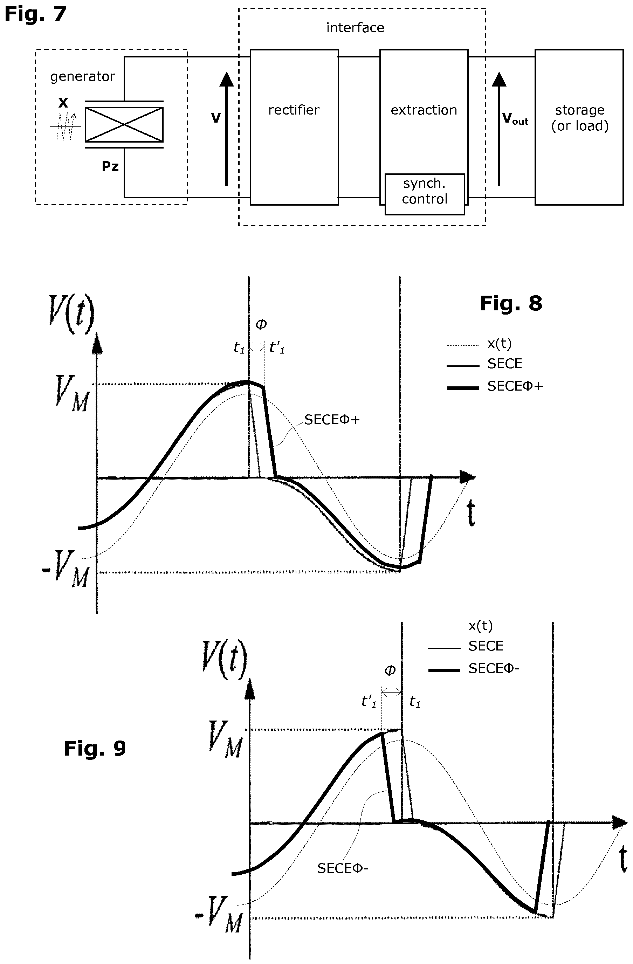

- FIGURE 7 is a schematic representation of a piezoelectric energy harvesting device compatible with the controlling method according to the invention;
- FIGURE 8 is a schematic representation that shows curve of piezo voltage with displacement of generator, in an exemplary embodiment of invention with a delayed phase shift for charging time;
- FIGURE 9 is a schematic representation that shows curve of piezo voltage with displacement of generator, in an exemplary embodiment of invention with an anticipated phase shift for charging time;

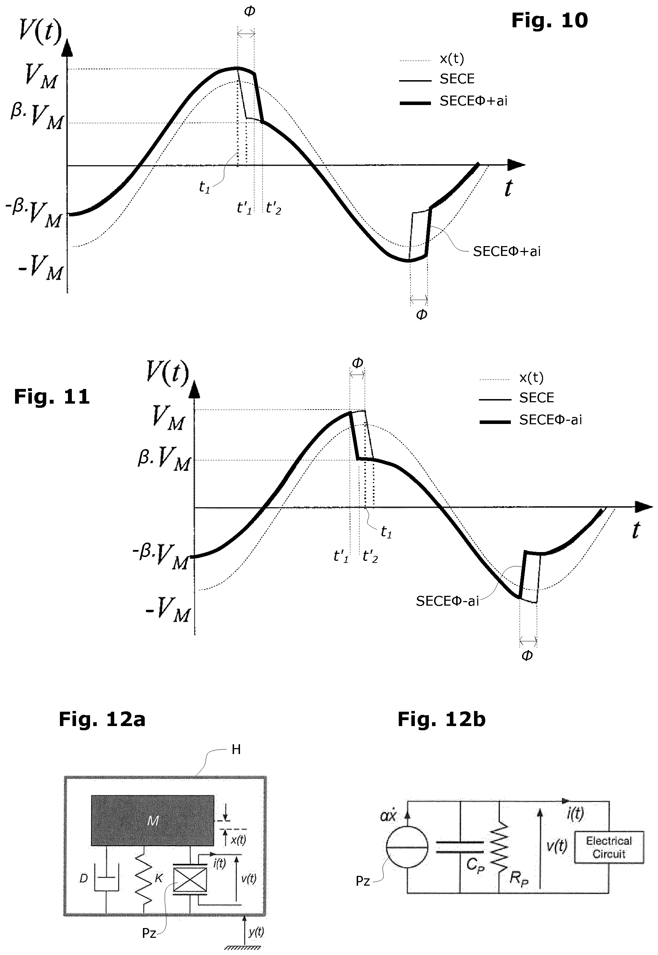

- FIGURE 10 is a schematic representation that shows curve of piezo voltage with displacement of generator, in an exemplary embodiment of invention with a delayed phase shift of charging time and anticipated interruption time;
- FIGURE 11 is a schematic representation that shows curve of piezo voltage with displacement of generator, in an exemplary embodiment of invention with an anticipated phase shift of charging time and anticipated interruption time;
- FIGURE 12a and b are schematic representations that show an example of a model for a piezoelectric energy harvesting device used for evaluating the results of the invention, from a mechanical point of view and respectively from an electrical point of view;

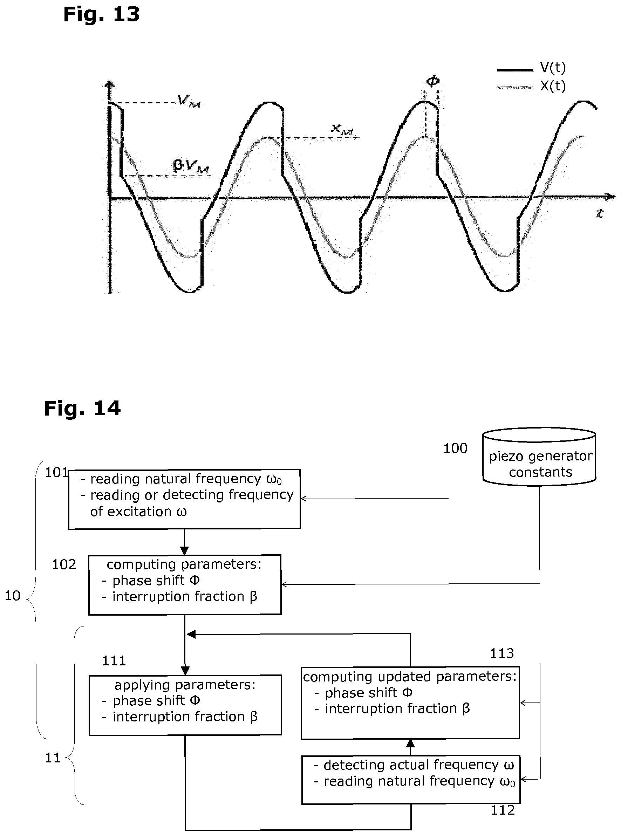

- FIGURE 13 is a graph showing the resulting curves of piezo voltage and displacement of generator, from a numerical simulation with a harvesting device modeled according to FIGURE 12, in an exemplary embodiment of invention with a delayed phase shift of charging time and anticipated interruption time;

- FIGURE 14 is a block diagram that shows a process of continuous re-optimization, throughout potential variations of its excitation frequency, of a SECE controlling method according to the invention;

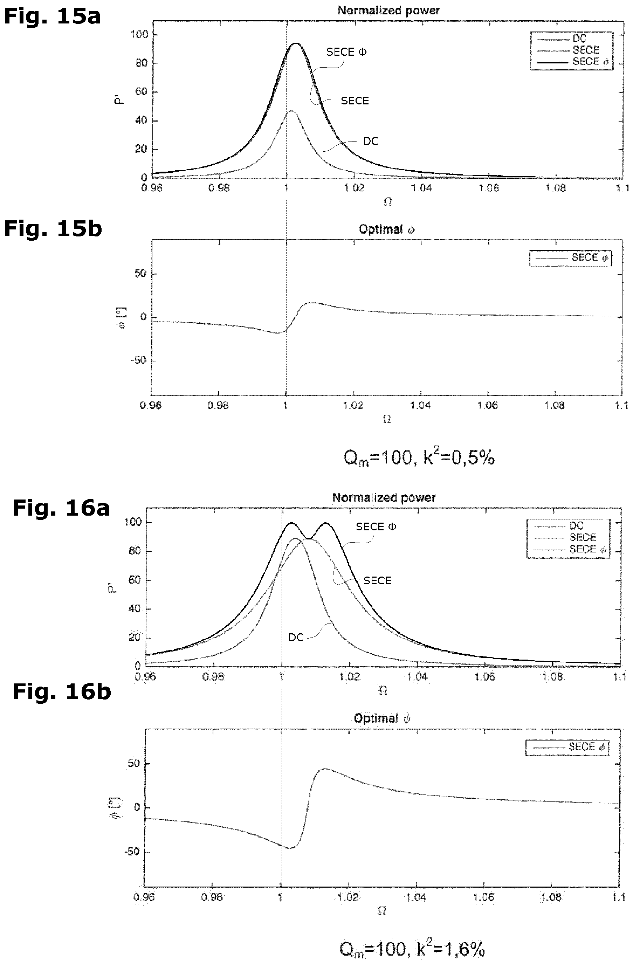

- FIGURE 15 is a graph showing the results of a numerical simulation of a SECE controlling method according to the invention, with a harvesting device modeled according to FIGURE 12 with a first set of generator parameters, with the curves showing as a function of the ratio between actual excitation frequency and natural frequency:

  ∘ in FIGURE 15a, produced normalized power, comparatively for

  a prior art unsynchronized interface,
  an interface synchronized with a prior art SECE controlling method, and
  an interface synchronized with an optimized phase shifted SECE controlling method without anticipated interruption, according to the invention,

  ∘ in FIGURE 15b, the angular value of corresponding optimized phase shift, according to the invention ;

- FIGURE 16 is similar to FIGURE 15, with phase shifting optimized according to the invention for a second set of parameters of the piezoelectric generator;

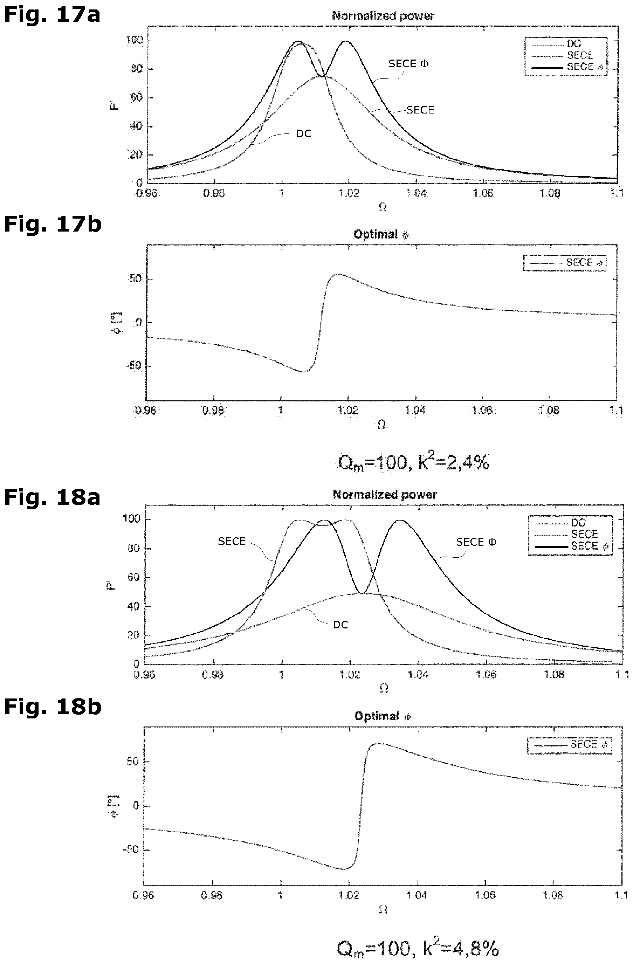

- FIGURE 17 is similar to FIGURE 15, with phase shifting optimized according to the invention for a third set of parameters of the piezoelectric generator;
- FIGURE 18 is similar to FIGURE 15, with phase shifting optimized according to the invention for a fourth set of parameters of the piezoelectric generator.

## Description in reference to the drawings

## Principle of synchronization

As illustrated in FIGURE 7, according to invention, an interface circuit is connected between the terminals of the piezoelectric generator Pz, for receiving piezoelectric voltage V produced by said generator when alternatively excited, in this example along a direction "x". Such piezoelectric voltage V is received through a rectifier circuit, which is shown here as included in the interface circuit. However, in within the scope of invention, the "interface circuit" could also be defined as not including the rectifier circuit.

Interface circuit comprises an extraction circuit, working in a synchronous manner with the piezoelectric generator Pz, controlled by a synchronization controlling circuit as detailed here. This interface circuit, together with the synchronization controlling circuit, provides a circuit for energy managing of the piezoelectric generator Pz.

Electrical energy is provided by the interface circuit as an output voltage $V_{out}$, through its connection to the terminals of the storage device or component, which here always implicitly includes the case of a direct consumer electrical load.

As a preferred example, such harvesting circuit is realized as the circuit of FIGURE 3, or similarly, but the controlling voltage $V_G$ is controlled differently. In other embodiments, invention is applied to circuits identical or similar to the circuits shown in FIGURE 2 or FIGURE 4, or other kind of circuits producing the same functional components shown in FIGURE 7

Electronics within the interface circuit, and more specifically within the synchronization controlling circuit, preferably works under a voltage of a few volts to a few tenths of volts, while consuming a very low power, as power levels of piezoelectric generators are typically found within a power range of a few tenths of nanowatts and a few tenths of microwatts.

Preferably, generated power is between 10 µW and 10 mW while piezoelectric maximum voltage $V_M$ is between 1 V to around 200 V, Piezoelectric generator is mechanically excited at a frequency between 0.1 Hz and 10 kHz, with an acceleration between 0.01 m/s$^2$ and 50 m/s$^2$.

As illustrated in FIGURE 8 and FIGURE 9, first aspect of the invention comprises controlling the electronic switch by the synchronization controlling circuit so as to trigger the discharge stage in a synchronized manner which is calculated according to a peak time (t1), at which a maximum value $V_M$ is reached by the absolute value of input voltage (V(t)), or of the piezo generator's displacement X(t), which here correspond to the electrical converted energy produced by the piezo generator. Differently from the prior art, the stage of discharging is triggered at a transfer time (t1') which is in offset from the peak time (t1) by a given non-zero phase shift (Φ), negative or positive.

FIGURE 8 illustrates an exemplary embodiment of invention with a delayed phase shift for charging time, with the voltage at input of interface circuit V(t) is referenced SECEΦ+. It can be seen that charging time is triggered at a time t1' which occurs later than the peak time t1. Thus, the curve SECEΦ+ of piezo voltage V(t) start its sudden descent later than the curve of the prior art SECE method.

Alternatively, FIGURE 9 illustrates another exemplary embodiment of invention with an anticipated phase shift for charging time, with the voltage at input of interface circuit V(t) is referenced SECEΦ-. It can be seen that charging time is triggered at a time t1' which occurs before the peak time t1. Thus, the curve SECEΦ- of piezo voltage V(t) start its sudden descent earlier than the curve of the prior art SECE method.

FIGURE 10 and FIGURE 11 illustrate embodiments where the stage of discharging is triggered at an anticipated time t2' which takes place before a zero-crossing time t2 at which the input voltage V(t) crosses zero volt.

Preferably, the anticipated time t2' is chosen as the time at which the input voltage V(t) reaches an interruption voltage defined as a given fraction β of the maximum value $V_M$ of said input voltage.

FIGURE 10 illustrates an exemplary embodiment of invention with a delayed phase shift of charging time, and which furthermore includes an anticipated interruption time. Charging time is delayed, with t1' occurring after t1. Interruption time is anticipated at t2', occurring when the curve SECEΦ+ai crosses the voltage value of $\beta.V_M$. Thus, the abrupt descent of V(t) interrupt before crossing the zero volts value.

Similarly, FIGURE 11 illustrates another exemplary embodiment of invention with an anticipated phase shift of charging time, charging time being anticipated with t1' occurring before t1, and which also includes an anticipated interruption time t2'.

**Modeling the interface operation**

A numerical model has been established, that produces a numerical evaluation of the interface operation and its results. This numerical modeling has been computed on the basis of a piezoelectric harvesting device schematically illustrated in FIGURE 12a and FIGURE 12b, when considered as an electromechanical resonator with one degree of freedom.

Electromechanical model of the piezoelectric generator

FIGURE 12a shows the device from a mechanical point of view, while FIGURE 12b from the electrical point of view, the "electrical circuit" block here represents the interface circuit.

Piezoelectric generator, or transducer, is characterized by its electromechanical force factor $\alpha$, its natural capacity Cp and its parasitic leakage resistance Rp, with Ap=1/Rp thus representing the parasitic conductance. M is the equivalent dynamical mass, D is the damping coefficient and K represents the mechanical stiffness of the device when the piezoelectric element Pz is in short circuit.

An external vibrating source produces the displacement y(t) of the housing H that encloses the system (the whole system or at least the piezo generator), with respect to the Galilean referential. This housing displacement y(t) induces a relative displacement x(t) between the inertial mass M and the housing H. Because of this relative displacement x(t), changes of constraints and deformation are applied to the piezoelectric material Pz. This creates a current i(t) and a voltage V(t) between the terminal electrodes of the piezoelectric element Pz.

Such a simplified piezoelectric system operates under the following relations:

$$\begin{cases} M\ddot{x} + Kx + D\dot{x} + \alpha V = M\gamma \\ I = \alpha\dot{x} - C_P\dot{V} - A_P V \end{cases} \quad (1)$$

$\omega_0$ is the angular frequency of the system, and is given by:

$$\omega_0 = \sqrt{\frac{K}{M}} \quad (2)$$

Three dimensionless parameters are commonly used for characterization of the device: $k^2$ is the squared effective coupling factor of the harvester structure, $\xi_M$ is the parasitic damping, and $\xi_E$ is the electrical damping. These parameters are expressed as follows:

$$k^2 = \frac{\alpha^2}{KC_0 + \alpha^2} \quad \xi_M = \frac{D}{2\sqrt{KM}} \quad \xi_E = \frac{1}{2R_P C_P \omega_0} \quad (3)$$

A modified coupling factor $k_m$ is used for simplification of the relations:

$$k_m^2 = \frac{\alpha^2}{KC_P} = \frac{k^2}{1-k^2} \tag{4}$$

Modelling the system with the interface circuit

As an example, interface circuit is considered to be realized in the same form as the circuit of FIGURE 3, extracted from a publication from the same inventor.

Electronic switch T is controlled through voltage $V_G$ which is produced by an electronic controlling circuit, not shown in FIGURE 3, so as to extract electrical energy form the energy produced by the piezoelectric element Pz, through controlling two parameters:

- phase shift Φ for starting the discharge stage by closing the switch T, is measured with respect to the maximum mechanical displacement x(t), and
- amount of energy extracted at each discharge stage, which depends from de closed duration $t_{on}$ of this switch T.

If $V_M$ is the peak piezoelectric voltage, the closed duration reduces the piezoelectric voltage to a value $\beta.V_M$, with β between 1 (for $t_{on}$=0) and 0 (for $t_{on} = \pi/\sqrt{LC_p}$ ).

FIGURE 13 shows an example of a resulting curve, simulated through this model with a delayed phase shift (Φ is positive) of charging time and anticipated interruption time (discharge stage extend only between $V_M$ and $\beta.V_M$ with β>0).

Optimizing the parameters

From the previous relations, with the classical hypothesis that fundamental component $V_1$ of piezoelectric voltage V overwhelmingly contributes to rule the dynamics of the system, we reach the following relation between $V_1$, x, and the parameters Φ and β in the frequency domain:

$$\underline{v}_1 = \frac{\alpha}{C_P}(v + jv)\underline{x} \quad \text{with} \quad \begin{cases} v = 1 + \frac{2}{\pi}\frac{1-\beta}{1+\beta}\sin(2\phi) \\ \\ v = \frac{4}{\pi}\frac{1-\beta}{1+\beta}\cos^2(\phi) \end{cases} \tag{5}$$

From relation (1) written in the frequency domain and relation (5), we reach the following expression for displacement x with respect to mechanical acceleration γ of housing H:

$$\underline{x} = \frac{M\underline{\gamma}}{K - M\omega^2 + \frac{\alpha^2}{C_P}v + j\left(D\omega + \frac{\alpha^2}{C_P}v\right)} \tag{6}$$

Furthermore, the power that is converted into electricity by the piezoelectric element Pz depends from $V_M$ and β as follows:

$$P = \frac{\omega}{2\pi}C_p V_M^2 (1 - \beta^2) \tag{7}$$

If $x_M$ is the amplitude of the relative displacement of inertial mass M, then $V_M$ reads as follows:

8

$$V_M = \frac{\alpha}{C_p} x_M cos(\phi) \frac{2}{1+\beta} \qquad (8)$$

From relations (7) and (8), with the components of the circuits considered as perfect (no losses in the coupled inductor, or in diodes, or in the electronic switch), electric power at output of system reads as:

$$P = \frac{2\omega}{\pi} \frac{\alpha^2}{C_p} cos^2(\phi) \frac{1-\beta}{1+\beta} x_M^2 \qquad (9)$$

To express harvested power in function of the housing acceleration and the other parameters, we have to extract displacement amplitude $x_M$ from mechanical acceleration amplitude $\gamma_M$ from relation (6), then substitute $x_M$ by its expression in relation (9). Then we substitute $\nu$ and $\upsilon$ by theirs expressions in function of $\phi$ and $\beta$ in relation (5).

We then obtain the following relation (10) for evaluating harvested power:

$$P = \frac{2\omega}{\pi} \frac{\alpha^2}{C_p} \frac{1-\beta}{1+\beta} cos^2(\phi) \frac{(M\gamma_M)^2}{\left(K - M\omega^2 + \frac{\alpha^2}{C_p}\left(1 + \frac{2}{\pi}\frac{1-\beta}{1+\beta}\sin(2\phi)\right)\right)^2 + \left(D\omega + \frac{\alpha^2}{C_p}\frac{4}{\pi}\frac{1-\beta}{1+\beta}cos^2(\phi)\right)^2}$$

For any value of angular frequency pulsation $\omega$ and any known values of the physical parameters of a given device, this relation may then be used as a control law for finding the values of $\phi$ and $\beta$ that will produce the highest output power P, or even an output power P that is adjusted to a given value beneath the highest value, or even a specific frequency bandwidth which is selected to harvest power.

In a general case, the values of the phase shift $\Phi$ and interruption fraction $\beta$ is thus chosen as one of the values of "$\Phi$" and "$\beta$" that give a maximum value to the output power "P", in a relation that can be written as:

$$P = \frac{1-\beta}{1+\beta} \frac{ZA.\omega.\cos^2\Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2\Phi\right)^2}$$

where:

- ZA, ZB, ZC, ZD are constants that depend from the electrical and mechanical properties of the components, and
- "$\omega$" is the angular frequency of the cyclic excitation actually received by the piezo generator Pz,
- "$\omega_0$" is the natural (or resonant) mechanical frequency of the piezo generator, and
- $\beta$ is the fraction, between 1 and 0, of the maximum input voltage $V_M$ at which the anticipated time t2' of interruption takes place.

As a particularity, in an embodiment designed with a phase shifted transfer time t1' and no anticipated of interruption time, relation (10) of output power P may be simplified with $\beta=0$. Thus, the value of the phase shift $\Phi$ is chosen as one of the values of "$\Phi$" that give a maximum value to the output power "P", in a relation that can be written as:

$$P = \frac{ZA.\omega.\cos^2\Phi}{ZB\left(ZD\left(\omega_0^2 - \omega^2\right) + \left(1 + \sin(2.\Phi)\right)\right)^2 + ZC\left(1 + \cos^2\Phi\right)^2}$$

where:

- ZA, ZB, ZC, ZD are constants that depend from the electrical and mechanical properties of the components, and
- "$\omega$" is the angular frequency of the cyclic excitation actually received by the piezo generator (Pz), and
- "$\omega_0$" is the natural mechanical frequency of the piezo generator.

More particularly, in an embodiment where actual excitation frequency $\omega_0$ is equal to the natural frequency $\omega_0$ of the piezoelectric generator, or may be considered as such, relation (10) of output power P may be simplified with $\beta=0$ and $\omega=\omega_0$. Thus, the value of the phase shift $\Phi$ is chosen as one of the values of "$\Phi$" that give a maximum value to the output power "P", in a relation that can be written as:

$$P = \frac{ZA.\omega.\cos^2\Phi}{ZB(1+\sin(\Phi))^2 + ZC(1+\cos^2\Phi)^2}$$

where:

- ZA, ZB, ZC are constants that depend from the electrical and mechanical properties of the components, and
- "$\omega$" is the angular frequency of the cyclic excitation received by the piezo generator.

As a particularity, in an embodiment of the second aspect with a synchronization control designed with a transfer time t1 at peak voltage $V_M$ and with an anticipated of interruption time, relation (10) of output power P may be simplified with $\Phi$ =0. Thus, the interruption voltage $\beta.V_M$ is chosen by one of the values of "$\beta$" that give a maximum value to the output power "P", in a relation that can be written as:

$$P = \frac{1-\beta}{1+\beta} \frac{ZA.\omega}{ZB(ZD(\omega_0^2 - \omega^2)+1)^2 + ZC\left(1+\dfrac{1-\beta}{1+\beta}\right)^2}$$

where:

- ZA, ZB, ZC, ZD are constants that depend from the electrical and mechanical properties of the components, and
- "$\omega$" is the angular frequency of the cyclic excitation actually received by the piezo generator (Pz),
- "$\omega_0$" is the natural mechanical frequency of the piezo generator, and
- $\beta$ is the fraction, between 1 and 0, of the maximum input voltage ($V_M$) at which the anticipated time (t2') of interruption takes place.

For solving this relation (10) or one of its simplified versions here above, an analytical solution may be searched in some embodiments, while it may happen that on one exists. In such case, analytic expressions of the optimal control laws for $\phi$ and $\beta$ as a function of angular frequency $\omega$ are found by searching the zeroes of partial derivatives of power P with respect to $\phi$ and $\beta$.

Preferably, from relations (1) to (9), optimal control laws $\phi(\omega)$ and $\beta(\omega)$ for a maximized harvested power P are computed by numerical solving, whatever the various parameters of the device, for example by a known solver and/or with a software like Matlab.

As illustrated in FIGURE 14, a process 10 of designing or programming a device according to the invention comprises a step 101 of:

- retrieving the natural frequency $\omega_0$ of said device, for example from a memory 100 that stores the various constants of the piezo generator Pz and of the device.
- retrieving or detecting the frequency $\omega$ of the excitation the device is to be submitted to, for example by detection of by reading from the same memory 100.

From the relation (10), using the corresponding constants retrieved for example from same memory 100, optimizing or adjusting the output power P, by solving said relation or by reading pre-solved solutions for it, this process 100 then comprises a step 102 of computing the control parameters $\phi$ and $\beta$ to be used for controlling electronic switch of device.

Said computed parameters are then memorized as phase shift $\phi$ and interruption fraction $\beta$, to be applied during the synchronization control of said device.

Furthermore, optimizing or adjusting output power is also proposed as a real-time servo-control process for such a device. Between successive uses or during a continuous use, the device executes a programmed process 11 that comprises one or several iterations of the following steps:

- 112: detecting, computing or reading a digital or analogical value that represents a difference between the natural mechanical frequency $\omega_0$ of the piezo generator and the actual frequency $\omega$ of a cyclic excitation currently received by the piezo generator Pz,
- 113: computing or reading a digital or analogical value of an optimized phase shift $\Phi$, from said difference $\omega-\omega_0$, for example by solving said relation or by reading pre-solved solutions for it, and
- 111: using said value of optimized phase shift for controlling the transfer time t1'.

It is thus possible to obtain a device that is capable of automatically adjust its synchronization law with respect to various changes of the excitation it is submitted to, such as adapting to a person that wears the device or to the activity this wearer is practicing.

Example of results

Numerical simulations have been performed, based on relation (10) that gives the output power, over a wide range of mismatch between the actual angular frequency $\omega$ of the excitation y(t) and the natural angular frequency $\omega_0$ of the device.

FIGURE 15 shows the results of a numerical simulation of a SECE controlling method according to the invention, with a harvesting device modeled according to FIGURE 12 that presents a first set of generator parameters.

In this first set, piezoelectric generator is supposed to exhibits the following parameters

- Qm=100 - where Qm is the mechanical quality factor, which means that all mechanical energy is supposed to be transferred to the piezoelectric material (that is to say the quality factor which is obtained when the piezoelectric element is short-circuited).
- $k^2$=0.5% - squared effective coupling factor of the harvester structure - where $k^2$ represents the electromechanical coupling factor, which evaluates the ratio of output energy against input energy for the piezoelectric material and generator.

On these graphics, horizontal axis shows the ratio of actual excitation frequency on natural frequency, i.e. $\omega_/\omega_0$.

For prior art:

- Curve "DC" shows the output normalized power P' in % (ratio of output power on electric power produced by piezo), produced by the DC prior art method of FIGURE 1b. Curve shows a power peak at around 50%, occurring just above value 1.
- Curve "SECE" shows the output power produced by the SECE prior art method of FIGURE 5 and FIGURE 6. Curve shows a power peak at around 90%, occurring just above the DC peak, and a frequency bandwidth which is greatly superior than DC method when taken at the same power level.

For the invention:

- For each value of resonance mismatch (i.e. $\omega_/\omega_0$) on the horizontal axis, phase shift $\Phi$ has been computed so as to optimize the output power at its highest value, through numerical solving of relation (10) in an embodiment with phase shifting and without anticipated interruption. Curve of FIGURE 15b shows the computed values of phase shift $\Phi$ in degrees.
- Curve SECE$\Phi$ of FIGURE 15a shows the output power produced with said optimization.

As can be seen, for these parameters of the generator, SECE$\Phi$ gives a curve with the same shape as for prior art SECE, at same level or just a little above.

Thus, even with a low electromechanical coupling $k^2$, phase shifting SECE according to the invention does not lose any power when compared with prior art SECE.

Similarly, FIGURE 16 shows the results of the invention for a second set of parameters of the piezoelectric generator:

- Qm=100, and
- $k^2$=1.6%.

For prior art: prior art SECE decreases slightly compared to FIGURE 15, while widening it bandwidth. While DC method gives a higher power, its bandwidth is still narrower that prior art SECE, around half of it.

For the invention: As can be seen, for this improved electromechanical coupling $k^2$, SECE$\Phi$ gives a curve with two peaks around 95%, dispatched on both sides of the prior art SECE peak, and always stays higher than the latter.

Thus, in this kind of device, phase shifting SECE according to the invention enables to obtain a higher power than prior art, and/or a wider bandwidth.

Similarly, FIGURE 17 shows the results of the invention for a second set of parameters of the piezoelectric generator:

- Qm=100, and
- $k^2$=2.4%.

For prior art: prior art SECE still decreases slightly its power, around 75% while still widening it bandwidth. DC method still increases slightly its power and its bandwidth, while its bandwidth is still narrower that prior art SECE.

For the invention: SECEΦ gives a curve quite similar to FIGURE 16, which enables a good scalability and flexibility. Its curve still has two peaks still around 95%, dispatched on both sides of the prior art SECE peak, and always stays higher than the latter.

Thus, in this kind of device, phase shifting SECE according to the invention enables to obtain a higher power and a wider bandwidth than prior art SECE, and a wider bandwidth than prior art DC with the same peak power.

Similarly, FIGURE 18 shows the results of the invention for a second set of parameters of the piezoelectric generator:

- Qm=100, and
- $k^2$=4.8%.

For prior art: prior art SECE consequently decreases its power, around 50% while still slightly widening it bandwidth. DC method keeps its power and widens its bandwidth at peak, while its bandwidth is still narrower that prior art SECE at low power.

For the invention: SECEΦ gives a curve similar to FIGURE 17, only with more separated peaks and an intermediate low point that decreases an follows the peak of prior art SECE.

Thus, in this kind of device, phase shifting SECE according to the invention still enables to obtain a higher power and a wider bandwidth than prior art SECE. Compared to prior art DC, phase shifting SECE produces the same peak power while slightly narrower at high power. However, it still enables a wider bandwidth at medium power levels that are above the peak of prior art SECE.

Thus, it appears that the phase shifting SECE method according to the invention offers a good regularity and flexibility for various kinds of piezoelectric generator while always enabling the highest power value, with a wide bandwidth at high or medium power value.

Such method and device thus brings new possibilities of performance and/or frequency bandwidth, with an interesting stability and flexibility with respect to the kind of generators, uses, and frequencies.

Of course, invention is not limited to the examples described here, and various adaptations may be made within the scope of invention as defined by the claims.

## Claims

1. Method for controlling an interface circuit within an energy harvesting device, wherein
said energy harvesting device comprises at least one piezoelectric generator (Pz) arranged for receiving a cyclic mechanical energy (X) and convert it into a cyclic electrical converted energy (V),
said interface circuit is operatively connected for receiving said electrical converted energy as a cyclic input voltage (V, Vrect) and for extracting at least part of energy as an output voltage (Vout) adapted for storage into a storage circuit (Cf),
said interface circuit comprising at least one inductor (L) and at least one electronic switch (T) controlled by a control circuitry so as to alternatively trigger, when successively changing its state:

- a stage of charging the inductor from the piezo generator, and
- a stage of discharging the inductor toward the storage circuit;

wherein said method comprises controlling said electronic switch so as to trigger the discharge stage in a synchronized manner which is calculated according to a peak time (t1), at which a maximum value ($V_M$) is reached by the absolute value of input voltage (V(t)), or of the piezo generator's displacement (X(t)), or of the electrical converted energy produced by the piezo generator,

said method being **characterized in that** the stage of discharging is triggered at a transfer time (t1') which is in offset from the peak time (t1) by a given non-zero phase shift (Φ), negative or positive.

2. Method according to the preceding claim, **characterized in that** the value of the phase shift (Φ) is chosen as one of the values of "Φ" that give a maximum value to the output power "P", in a relation that can be written as:

$$P = \frac{1-\beta}{1+\beta} \frac{ZA.\omega.\cos^2\Phi}{ZB\left(ZD(\omega_0^2 - \omega^2) + \left(1 + \frac{2}{\pi}\frac{1-\beta}{1+\beta}\sin(2.\Phi)\right)\right)^2 + ZC\left(1 + \frac{1-\beta}{1+\beta}\cos^2\Phi\right)^2}$$

where:

- ZA, ZB, ZC, ZD are constants that depend from the electrical and mechanical properties of the components, and
- "ω" is the angular frequency of the cyclic excitation received by the piezo generator,
- "$\omega_0$" is the natural (or resonant) mechanical frequency of the piezo generator, and

and where $\beta = 0$ and $\omega = \omega_0$.

3. Method according to claim 1, **characterized in that** the value of the phase shift (Φ) is calculated according to a value of the difference between the frequency of an actual cyclic excitation (ω) received by the piezo generator (Pz) and the natural mechanical frequency ($\omega_0$) of said piezo generator.

4. Method according to the preceding claim, **characterized in that** it comprises one or several iterations of the following steps:

- detecting, computing or reading a digital or analogical value that represents a difference between the natural mechanical frequency ($\omega_0$) of the piezo generator and the actual frequency (ω) of a cyclic excitation currently received by the piezo generator (Pz),
- computing or reading a digital or analogical value of an optimized phase shift (Φ), from said difference (ω-$\omega_0$), and
- using said value of optimized phase shift for controlling the transfer time (t1').

5. Method according to any one of claims 3 to 4, **characterized in that** the value of the phase shift (Φ) is chosen as one of the values of "Φ" that give a maximum value to the output power "P", in a relation that can be written as:

$$P = \frac{1-\beta}{1+\beta} \frac{ZA.\omega.\cos^2\Phi}{ZB\left(ZD(\omega_0^2 - \omega^2) + \left(1 + \frac{2}{\pi}\frac{1-\beta}{1+\beta}\sin(2.\Phi)\right)\right)^2 + ZC\left(1 + \frac{1-\beta}{1+\beta}\cos^2\Phi\right)^2}$$

where:

- ZA, ZB, ZC, ZD are constants that depend from the electrical and mechanical properties of the components, and
- "ω" is the angular frequency of the cyclic excitation actually received by the piezo generator (Pz), and

"$\omega_0$" is the natural mechanical frequency of the piezo generator;
and where $\beta = 0$.

6. Method according to any one of the preceding claims, **characterized in that** the stage of discharging is triggered at an anticipated time (t2') which takes place before a zero-crossing time (t2) at which the input voltage (V(t)) crosses zero volt.

7. Method according to the preceding claim, **characterized in that** the anticipated time (t2') is chosen as the time at which the input voltage (V(t)) reaches an interruption voltage defined as a given fraction (β) of the maximum value ($V_M$) of said input voltage.

8. Method according to the preceding claim, **characterized in that** the values of the phase shift (Φ) and interruption fraction (β) are chosen as one set of the values of "Φ" and "β" that give a maximum value to the output power "P", in a relation that can be written as:

$$P = \frac{1-\beta}{1+\beta} \frac{ZA.\omega.\cos^2 \Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2 \Phi\right)^2}$$

where:

- ZA, ZB, ZC, ZD are constants that depend from the electrical and mechanical properties of the components, and
- "ω" is the angular frequency of the cyclic excitation actually received by the piezo generator (Pz), and
- "$\omega_0$" is the natural mechanical frequency of the piezo generator, and
- β is the fraction, between 1 and 0, of the maximum input voltage ($V_M$) at which the anticipated time (t2') of interruption takes place.

9. Method for controlling an interface circuit within an energy harvesting circuit, wherein
said energy harvesting circuit comprises at least one piezoelectric generator (Pz) arranged for receiving a cyclic mechanical energy (X) and convert it into a cyclic electrical converted energy (V),
said interface circuit is operatively connected for receiving said electrical converted energy as a cyclic input voltage (V, Vrect) and for extracting at least part of it as an output voltage (Vout) adapted for storage into a storage circuitry (Cf),
said interface circuit comprising at least one inductor (L) and at least one electronic switch (T) controlled by a control circuitry so as to alternatively trigger, when successively changing its state:

- a stage of charging the inductor from the piezo generator, and
- a stage of discharging the inductor toward the storage circuit;

wherein said method comprises controlling said electronic switch so as to trigger the discharge stage in a synchronized manner which is calculated according to a peak time (t1), at which a maximum value is reached by the absolute value of input voltage (V(t)), or of the piezo generator's displacement (X(t)), or of the electrical converted energy produced by the piezo generator,
wherein the stage of discharging is triggered at an anticipated time (t2') which takes place before a zero-crossing time (t2) at which the input voltage (V(t)) crosses zero volt, said anticipated time (t2') being chosen as the time at which the input voltage (V(t)) reaches an interruption voltage defined as a given fraction (β) of the maximum value ($V_M$) of said input voltage,
said method being **characterized in that** the anticipated time (t2') is calculated according to a value of the difference between the frequency of an actual cyclic excitation (ω) received by the piezo generator (Pz) and the natural mechanical frequency ($\omega_0$) of said piezo generator.

10. Method according to the preceding claim, **characterized in that** the interruption voltage (β.$V_M$) is chosen by one of the values of "β" that give a maximum value to the output power "P", in a relation that can be written as:

$$P = \frac{1-\beta}{1+\beta} \frac{ZA.\omega.\cos^2 \Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2 \Phi\right)^2}$$

where:

- ZA, ZB, ZC, ZD are constants that depend from the electrical and mechanical properties of the components, and
- "ω" is the angular frequency of the cyclic excitation actually received by the piezo generator (Pz),
- "$\omega_0$" is the natural mechanical frequency of the piezo generator, and
- β is the fraction, between 1 and 0, of the maximum input voltage ($V_M$) at which the anticipated time (t2') of interruption takes place;

and where Φ=0.

**11.** Device comprising an interface circuit within or for an energy harvesting device that comprises at least one piezoelectric generator (Pz) arranged for receiving a cyclic mechanical energy (X) and convert it into a cyclic electrical converted energy (V),
said interface circuit being arranged for receiving said electrical converted energy as a cyclic input voltage (V, Vrect) and for extracting at least part of said energy as an output voltage (Vout) adapted for storage into a storage circuitry (Cf),
said interface circuit comprising at least one inductor (L) and at least one electronic switch (T) controlled by a control circuitry so as to alternatively trigger, when successively changing its state:

- a stage of charging the inductor from the piezo generator, and
- a stage of discharging the inductor toward the storage circuit;

wherein said control circuitry is arranged, hardwired and/or soft wired, for controlling said electronic switch so as to trigger the discharge stage in a synchronized manner which is calculated according to a peak time (t1), at which a maximum value is reached by the absolute value of input voltage (V(t)), or of the piezo generator's displacement (X(t)), or of the electrical converted energy produced by the piezo generator,
said device being **characterized in that** said control circuitry is arranged, hardwired and/or soft wired, for implementing a method according to any one of preceding claims.

**12.** Device according to the preceding claim, **characterized in that** the interface circuit comprises at least:

- a rectifier circuitry, such as a diodes bridge, which is operatively arranged and connected for receiving the input voltage (V(t)) from the piezoelectric (Pz) generator as an alternative voltage and producing from it a cyclic rectified voltage (Vrect),
- an extraction circuitry, operatively connected for receiving the cyclic rectified voltage (Vrect) through at least two input terminals and for providing an output extracted electrical energy through at least two output terminals,

wherein said extraction circuitry comprises :

- at least one inductor (L) connected in parallel between said output terminals, and
- at least one electronic switch (T), such as a MOSFET transistor, operatively connected so as to allow or interrupt a charging current between one input terminal and one output terminal according, to a controlling circuit.

**13.** Device according to claim 11, **characterized in that** the interface circuit comprises at least:

- a rectifier circuitry, such as a diodes bridge, which is operatively arranged and connected for receiving the input voltage (V(t)) from the piezoelectric (Pz) generator as an alternative voltage and producing from it a cyclic rectified voltage (Vrect),
- an extraction circuitry, operatively connected for receiving the cyclic rectified voltage (Vrect) through at least two input terminals and for providing an output extracted electrical energy through at least two output terminals,

wherein said extraction circuitry comprises :

- at least one coupled inductor (L) including

  ∘ at least one primary winding connected in parallel with the input terminals, and
  ∘ at least one secondary winding connected in parallel with the output terminals ;
- at least one electronic switch (T), such as a MOSFET transistor, operatively connected so as to allow or interrupt a charging current ($I_L$) between one input terminal the primary winding of the coupled inductor (L), according to an controlling circuit ($V_G$).

**14.** Device according to claim 11, **characterized in that** the interface circuit comprises at least:

- a rectifier circuitry, such as a diodes bridge, which is operatively arranged and connected for receiving the input voltage (V(t)) from the piezoelectric (Pz) generator as an alternative voltage and producing from it a cyclic rectified voltage (Vrect),

- an extraction circuitry, operatively connected for receiving the cyclic rectified voltage (Vrect) through at least a first and a second input terminals and for providing an output extracted electrical energy through at least a first and a second output terminals, for example with the second input terminal connected with the second output terminal,

wherein said extraction circuitry comprises :

- at least one inductor (L) connected in series between the first input terminal and an intermediate terminal,
- at least a first controlled electronic switch (S1), operatively connected so as to allow or interrupt a current to flow between said intermediate terminal and the second input terminal, and
- at least a second controlled electronic switch (S2), operatively connected so as to allow or interrupt a current to flow between said intermediate terminal and first output terminal connected to said inductor.

**Patentansprüche**

1. Verfahren zur Steuerung einer Schnittstellenschaltung innerhalb einer Energiegewinnungsvorrichtung, wobei

   die Energiegewinnungsvorrichtung wenigstens einen piezoelektrischen Generator (Pz) umfasst, der zum Empfangen einer zyklischen mechanischer Energie (X) und sie in zyklische elektrische umgewandelte Energie (V) umzuwandeln, angeordnet ist,
   wobei die Schnittstellenschaltung betriebsbereit angeschlossen ist, um die elektrische umgewandelte Energie als zyklische Eingangsspannung (V, Vrect) zu empfangen und um wenigstens einen Teil der Energie als Ausgangsspannung (Vout) zu extrahieren, die zum Speichern in einer Speicherschaltung (Cf) ausgebildet ist,
   wobei die Schnittstellenschaltung wenigstens einen Induktor (L) und wenigstens einen elektronischen Schalter (T) umfasst, der durch eine Steuerschaltung gesteuert wird, um bei sukzessiver Änderung seines Zustandes alternativ Folgendes auszulösen:

   - einen Schritt des Aufladens des Induktors von dem Piezogenerator und
   - einen Schritt des Entladens des Induktors zu der Speicherschaltung;

   wobei das Verfahren das Steuern des elektronischen Schalters umfasst, um den Schritt des Entladens in synchronisierter Weise auszulösen, die nach einer Spitzenzeit (t1) berechnet wird, bei der ein maximaler Wert ($V_M$) durch den absoluten Wert der Eingangsspannung (V(t)) erreicht wird, oder der Verschiebung des Piezogenerators (X(t)) oder der von dem Piezogenerator erzeugten elektrischen umgewandelten Energie, wobei das Verfahren **dadurch gekennzeichnet ist, dass** der Schritt des Entladens zu einer Transferzeit (t1') ausgelöst wird, die zu der Spitzenzeit (t1) um eine bestimmte negative oder positive Phasenverschiebung ($\Phi$) ungleich Null versetzt ist.

2. Verfahren nach dem vorhergehenden Anspruch, **dadurch gekennzeichnet, dass** der Wert der Phasenverschiebung ($\Phi$) als einer der Werte von "($\Phi$)" ausgewählt ist, die der Ausgangsleistung "P" einen maximalen Wert verleihen, in einer Relation, die wie folgt geschrieben werden kann:

$$P = \frac{1-\beta}{1+\beta} \frac{ZA.\omega.\cos^2 \Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2 \Phi\right)^2}$$

wobei:

   - ZA, ZB, ZC, ZD Konstanten sind, die von den elektrischen und mechanischen Eigenschaften der Komponenten abhängen, und
   - "$\omega$" die Winkelfrequenz der zyklischen Erregung ist, die von dem Piezogenerator empfangen wird,
   - "$\omega_0$" die natürliche (oder) mechanische (Resonanz-)Frequenz des Piezogenerators ist, und

   wobei $\beta = 0$ und $\omega = \omega_0$ ist.

**3.** Verfahren nach Anspruch 1, **dadurch gekennzeichnet, dass** der Wert der Phasenverschiebung (Φ) nach einem Wert der Differenz zwischen der Frequenz einer tatsächlichen zyklischen Erregung (ω), die von dem Piezogenerator (Pz) empfangen wird, und der natürlichen mechanischen Frequenz (ω₀) des Piezogenerators berechnet wird.

**4.** Verfahren nach dem vorhergehenden Anspruch, **dadurch gekennzeichnet, dass** es eine oder mehrere Wiederholungen der folgenden Schritte umfasst:

- Feststellen, Berechnen oder Ablesen eines digitalen oder analogen Wertes, der eine Differenz zwischen der natürlichen mechanischen Frequenz (ω₀) des Piezogenerators und der tatsächlichen Frequenz (ω) einer zyklischen Erregung repräsentiert, die aktuell von dem Piezogenerator (Pz) empfangen wird,
- Berechnen oder Ablesen eines digitalen oder analogen Wertes einer optimierten Phasenverschiebung (Φ) von der Differenz (ω-ω₀) und
- Verwenden des Wertes der optimierten Phasenverschiebung zur Steuerung der Transferzeit (t1').

**5.** Verfahren nach einem der Ansprüche 3 bis 4, **dadurch gekennzeichnet, dass** der Wert der Phasenverschiebung (Φ) ausgewählt ist als einer der Werte von "Φ", die der Ausgangsleistung "P" einen maximalen Wert verleihen, in einer Relation, die wie folgt geschrieben werden kann:

$$P = \frac{1-\beta}{1+\beta} \frac{ZA.\omega.\cos^2 \Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2 \Phi\right)^2}$$

wobei:

- ZA, ZB, ZC, ZD Konstanten sind, die von den elektrischen und mechanischen Eigenschaften der Komponenten abhängen, und
- "ω" die Winkelfrequenz der zyklischen Erregung ist, die von dem Piezogenerator tatsächlich empfangen wird,
- " ω₀" die natürliche mechanische Frequenz des Piezogenerators ist und wobei β = 0 ist.

**6.** Verfahren nach einem der vorhergehenden Ansprüche, **dadurch gekennzeichnet, dass** der Schritt des Entladens zu einer antizipierten Zeit (t2') ausgelöst wird, die vor einer Nulldurchgangszeit (t2) stattfindet, an der die Eingangsspannung (V(t)) Null Volt überschreitet.

**7.** Verfahren nach dem vorhergehenden Anspruch, **dadurch gekennzeichnet, dass** die antizipierte Zeit (t2') als die Zeit ausgewählt ist, an der die Eingangsspannung (V(t)) eine Unterbrechungsspannung erreicht, die als bestimmter Bruchteil (β) des maximalen Wertes (V_M) der Eingangsspannung definiert ist.

**8.** Verfahren nach dem vorhergehenden Anspruch, **dadurch gekennzeichnet, dass** die Werte der Phasenverschiebung (Φ) und des Unterbrechungsbruchteils (β) als ein Satz der Werte von "Φ" und "β" ausgewählt sind, die der Ausgangsleistung "P" einen maximalen Wertes verleihen, in einer Relation, die wie folgt geschrieben werden kann:

$$P = \frac{1-\beta}{1+\beta} \frac{ZA.\omega.\cos^2 \Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2 \Phi\right)^2}$$

wobei:

- ZA, ZB, ZC, ZD Konstanten sind, die von den elektrischen und mechanischen Eigenschaften der Komponenten abhängen, und
- "ω" die Winkelfrequenz der zyklischen Erregung ist, die von dem Piezogenerator (Pz) tatsächlich empfangen wird, und
- " ω₀" die natürliche mechanische Frequenz des Piezogenerators ist und
- β der Bruchteil zwischen 1 und 0 der maximalen Eingangsspannung (V_M) ist, an dem die antizipierte Zeit (t2') der Unterbrechung stattfindet.

9. Verfahren zur Steuerung einer Schnittstellenschaltung innerhalb einer Energiegewinnungsschaltung, wobei

die Energiegewinnungsschaltung wenigstens einen piezoelektrischen Generator (Pz) umfasst, der zum Empfangen einer zyklischen mechanischen Energie (X) und sie in zyklische elektrische umgewandelte Energie (V) umzuwandeln, angeordnet ist,
wobei die Schnittstellenschaltung betriebsbereit angeschlossen ist, um die elektrische umgewandelte Energie als zyklische Eingangsspannung (V, Vrect) zu empfangen und um wenigstens einen Teil davon als Ausgangsspannung (Vout) zu extrahieren, die zum Speichern in einer Speicherschaltung (Cf) ausgebildet ist,
wobei die Schnittstellenschaltung wenigstens einen Induktor (L) und wenigstens einen elektronischen Schalter (T) umfasst, der durch eine Steuerschaltung gesteuert wird, um bei sukzessiver Änderung ihres Zustandes alternativ Folgendes auszulösen:

- einen Schritt des Aufladens des Induktors von dem Piezogenerator und
- einen Schritt des Entladens des Induktors zu der Speicherschaltung;

wobei das Verfahren das Steuern des elektronischen Schalters umfasst, um den Schritt des Entladens in synchronisierter Weise auszulösen, die nach einer Spitzenzeit (t1) berechnet wird, bei der ein maximaler Wert durch den absoluten Wert der Eingangsspannung (V(t)) erreicht wird, oder der Verschiebung des Piezogenerators (X(t)) oder der von dem Piezogenerator erzeugten elektrischen umgewandelten Energie,
wobei der Schritt des Entladens zu einer Transferzeit (t1') ausgelöst wird, die vor einer Nulldurchgangszeit (t2) stattfindet, an der die Eingangsspannung (V(t)) Null Volt überschreitet, wobei die
antizipierte Zeit (t2') als die Zeit ausgewählt ist, an der die Eingangsspannung (V(t)) eine Unterbrechungsspannung erreicht, die als bestimmter Bruchteil ($\beta$) des maximalen Wertes ($V_M$) der Eingangsspannung definiert ist,
wobei das Verfahren **dadurch gekennzeichnet ist, dass** die antizipierte Zeit (t2') nach einem Wert der Differenz zwischen der Frequenz einer tatsächlichen zyklischen Erregung ($\omega$), die von dem Piezogenerator (Pz) empfangen wird, und der natürlichen mechanischen Frequenz ($\omega_0$) des Piezogenerators berechnet wird.

10. Verfahren nach dem vorhergehenden Anspruch, **dadurch gekennzeichnet, dass** die Unterbrechungsspannung ($\beta$, $V_M$) durch einen der Werte von "$\beta$" ausgewählt ist, die der Ausgangsleistung "P" einen maximalen Wert verleihen, in einer Relation, die wie folgt geschrieben werden kann:

$$P = \frac{1-\beta}{1+\beta} \frac{ZA.\omega.\cos^2 \Phi}{ZB\left(ZD\left(\omega_0^2 - \omega^2\right) + \left(1 + \frac{2}{\pi}\frac{1-\beta}{1+\beta}\sin(2.\Phi)\right)\right)^2 + ZC\left(1 + \frac{1-\beta}{1+\beta}\cos^2 \Phi\right)^2}$$

wobei:

- ZA, ZB, ZC, ZD Konstanten sind, die von den elektrischen und mechanischen Eigenschaften der Komponenten abhängen, und
- "$\omega$" die Winkelfrequenz der zyklischen Erregung ist, die von dem Piezogenerator (Pz) tatsächlich empfangen wird,
- "$\omega_0$" die natürliche mechanische Frequenz des Piezogenerators ist und
- $\beta$ der Bruchteil zwischen 1 und 0 der maximalen Eingangsspannung ($V_M$) ist, an dem die antizipierte Zeit (t2') der Unterbrechung stattfindet, und

wobei "$\Phi$" = 0.

11. Vorrichtung, umfassend eine Schnittstellenschaltung innerhalb oder für eine Energiegewinnungsvorrichtung, die wenigstens einen piezoelektrischen Generator (Pz) umfasst, der zum Empfangen einer zyklischen mechanischen Energie (X) und sie in zyklische elektrische umgewandelte Energie (V) umzuwandeln, angeordnet ist,

wobei die Schnittstellenschaltung angeordnet ist, um die elektrische umgewandelte Energie als zyklische Eingangsspannung (V, Vrect) zu empfangen und um wenigstens einen Teil der Energie als Ausgangsspannung (Vout) zu extrahieren, die zum Speichern in einer Speicherschaltung (Cf) ausgebildet ist,
wobei die Schnittstellenschaltung wenigstens einen Induktor (L) und wenigstens einen elektronischen Schalter (T) umfasst, der durch eine Steuerschaltung gesteuert wird, um bei sukzessiver Änderung ihres Zustandes alternativ Folgendes auszulösen:

- einen Schritt des Aufladens des Induktors von dem Piezogenerator und
- einen Schritt des Entladens des Induktors zu der Speicherschaltung;

wobei die Steuerschaltung fest verdrahtet und/oder soft verdrahtet angeordnet ist, um den elektronischen Schalter zu steuern,
um den Schritt des Entladens in synchronisierter Weise auszulösen, die nach einer Spitzenzeit (t1) berechnet wird, bei der ein maximaler Wert durch den absoluten Wert der Eingangsspannung (V(t)) erreicht wird, oder der Verschiebung des Piezogenerators (X(t)) oder der von dem Piezogenerator erzeugten elektrischen umgewandelten Energie,
wobei die Vorrichtung **dadurch gekennzeichnet ist, dass** die Steuerschaltung fest verdrahtet und/oder soft verdrahtet zum Implementieren eines Verfahrens nach einem der vorhergehenden Ansprüche angeordnet ist.

**12.** Vorrichtung nach dem vorhergehenden Anspruch, **dadurch gekennzeichnet, dass** die Schnittstellenschaltung wenigstens Folgendes umfasst:

- eine Gleichrichterschaltung, wie eine Diodenbrücke, die betriebsbereit angeordnet und angeschlossen ist, um die Eingangsspannung (V(t)) von dem piezoelektrischen Generator (Pz) als Wechselspannung zu empfangen und daraus eine zyklische gleichgerichtete Spannung (Vrect) zu erzeugen,
- eine Extraktionsschaltung, die betriebsbereit angeschlossen ist, um die zyklische gleichgerichtete Spannung (Vrect) durch wenigstens zwei Eingangsanschlüsse zu empfangen, und um durch wenigstens zwei Ausgangsanschlüsse eine vom Ausgang extrahierte, elektrische Energie bereitzustellen,

wobei die Extraktionsschaltung Folgendes umfasst:

- wenigstens einen Induktor (L), der zwischen den Ausgangsanschlüssen parallel geschaltet ist, und
- wenigstens einen elektronischen Schalter (T), wie ein MOSFET-Transistor, der betriebsbereit angeschlossen ist, um zwischen einem Eingangsanschluss und einem Ausgangsanschluss entsprechend einer Steuerschaltung einen Ladestrom zuzulassen oder zu unterbrechen.

**13.** Vorrichtung nach Anspruch 11, **dadurch gekennzeichnet, dass** die Schnittstellenschaltung wenigstens Folgendes umfasst:

- eine Gleichrichterschaltung, wie eine Diodenbrücke, die betriebsbereit angeordnet und angeschlossen ist, um die Eingangsspannung (V(t)) von dem piezoelektrischen Generator (Pz) als Wechselspannung zu empfangen und daraus eine zyklische gleichgerichtete Spannung (Vrect) zu erzeugen,
- eine Extraktionsschaltung, die betriebsbereit angeschlossen ist, um die zyklische gleichgerichtete Spannung (Vrect) durch wenigstens zwei Eingangsanschlüsse zu empfangen, und um durch wenigstens zwei Ausgangsanschlüsse eine vom Ausgang extrahierte, elektrische Energie bereitzustellen,

wobei die Extraktionsschaltung Folgendes umfasst:

- wenigstens einen gekoppelten Induktor (L) einschließlich

∘ wenigstens eine Primärwicklung, die mit den Eingangsanschlüssen parallel geschaltet ist, und
∘ wenigstens eine Sekundärwicklung, die mit den Ausgangsanschlüssen parallel geschaltet ist;

- wenigstens einen elektronischen Schalter (T), wie ein MOSFET-Transistor, der betriebsbereit angeschlossen ist, um zwischen einem Eingangsanschluss der Primärwicklung des gekoppelten Induktors (L) entsprechend einer Steuerschaltung ($V_G$) einen Ladestrom ($I_L$) zuzulassen oder zu unterbrechen.

**14.** Vorrichtung nach Anspruch 11, **dadurch gekennzeichnet, dass** die Schnittstellenschaltung wenigstens Folgendes umfasst:

- eine Gleichrichterschaltung, wie eine Diodenbrücke, die betriebsbereit angeordnet und angeschlossen ist, um die Eingangsspannung (V(t)) von dem piezoelektrischen Generator (Pz) als Wechselspannung zu empfangen und daraus eine zyklische gleichgerichtete Spannung (Vrect) zu erzeugen,

- eine Extraktionsschaltung, die betriebsbereit angeschlossen ist, um die zyklische gleichgerichtete Spannung (Vrect) durch wenigstens einen ersten und einen zweiten Eingangsanschluss zu empfangen, und um durch wenigstens einen ersten und einen zweiten Ausgangsanschluss, z.B. wobei der zweite Eingangsanschluss an den zweiten Ausgangsanschluss angeschlossen ist, eine vom Ausgang extrahierte, elektrische Energie bereitzustellen,

wobei die Extraktionsschaltung Folgendes umfasst:

- wenigstens einen Induktor (L), der zwischen dem ersten Eingangsanschluss und einem Zwischenanschluss in Reihe geschaltet ist,
- wenigstens einen ersten gesteuerten elektronischen Schalter (S1), der betriebsbereit angeschlossen ist, um einen Strom zwischen dem Zwischenanschluss und dem zweiten Eingangsanschluss fließen zu lassen oder zu unterbrechen, und
- wenigstens einen zweiten gesteuerten elektronischen Schalter (S2),

der betriebsbereit angeschlossen ist, um einen Strom zwischen dem Zwischenanschluss und dem ersten Ausgangsanschluss, der an den Induktor angeschlossen ist, fließen zu lassen oder zu unterbrechen.

## Revendications

1. Procédé de commande d'un circuit d'interface dans un dispositif de récupération d'énergie, dans lequel ledit dispositif de récupération d'énergie comprend au moins un générateur piézoélectrique (Pz) agencé pour recevoir une énergie mécanique cyclique (X) et la convertir en une énergie convertie électrique cyclique (V),

ledit circuit d'interface est connecté fonctionnellement pour recevoir ladite énergie électrique convertie en tant que tension d'entrée cyclique (V, Vrect) et extraire au moins une partie d'énergie en tant que tension de sortie (Vout) apte à être stockée dans un circuit de stockage (Cf),

ledit circuit d'interface comprenant au moins une bobine d'induction (L) et au moins un interrupteur électronique (T) commandé par un circuit de commande de manière à déclencher de manière alternative, lors d'un changement successif de son état :

- un étage de charge de la bobine d'induction à partir du générateur piézoélectrique, et
- un étage de décharge de la bobine d'induction vers le circuit de stockage ;

ledit procédé comprenant une commande dudit interrupteur électronique de manière à déclencher l'étage de décharge d'une manière synchronisée qui est calculée conformément à un instant de crête (t1), auquel une valeur maximale ($V_M$) est atteinte par la valeur absolue de la tension d'entrée (V(t)), ou du déplacement (X(t)) du générateur piézoélectrique, ou de l'énergie convertie électrique produite par le générateur piézoélectrique,

ledit procédé étant **caractérisé en ce que** l'étage de décharge est déclenché à un instant de transfert (t1') qui est décalé de l'instant de crête (t1) par un déphasage déterminé et non nul (Φ), négatif ou positif.

2. Procédé selon la revendication précédente, **caractérisé en ce que** la valeur du déphasage (Φ) est choisie comme l'une des valeurs de "Φ" qui donnent une valeur maximale à la puissance de sortie "P", dans une relation qui peut être écrite sous la forme :

$$P = \frac{1-\beta}{1+\beta} \frac{ZA.\omega.cos^2\Phi}{ZB\left(ZD(\omega_0^2 - \omega^2) + \left(1 + \frac{2}{\pi}\frac{1-\beta}{1+\beta}sin(2.\Phi)\right)\right)^2 + ZC\left(1 + \frac{1-\beta}{1+\beta}cos^2\Phi\right)^2}$$

où :

- ZA, ZB, ZC, ZD sont des constantes qui dépendent des propriétés électriques et mécaniques des composants, et
- "$\omega$" est la fréquence angulaire de l'excitation cyclique reçue par le générateur piézoélectrique,
- "$\omega_0$" est la fréquence mécanique naturelle (ou de résonance) du générateur piézoélectrique, et

et où $\beta = 0$ and $\omega=\omega_0$.

3. Procédé selon la revendication 1, **caractérisé en ce que** la valeur du déphasage ($\Phi$) est calculée conformément à une valeur de la différence entre la fréquence d'une excitation cyclique réelle ($\omega$) reçue par le générateur piézoélectrique (Pz) et la fréquence mécanique naturelle ($\omega_0$) dudit générateur piézoélectrique.

4. Procédé selon la revendication précédente, **caractérisé en ce qu'**il comprend une ou plusieurs itérations des étapes suivantes :

   - la détection, le calcul ou la lecture d'une valeur numérique ou analogique qui représente une différence entre la fréquence mécanique naturelle ($\omega_0$) du générateur piézoélectrique et la fréquence réelle ($\omega$) d'une excitation cyclique présentement reçue par le générateur piézoélectrique (Pz),
   - le calcul ou la lecture d'une valeur numérique ou analogique d'un déphasage optimisé ($\Phi$), à partir de ladite différence ($\omega-\omega_0$), et
   - l'utilisation de ladite valeur de déphasage optimisée pour commander l'instant de transfert (t1').

5. Procédé selon l'une quelconque des revendications 3 à 4, **caractérisé en ce que** la valeur du déphasage ($\Phi$) est choisie comme l'une des valeurs de "$\Phi$" qui donnent une valeur maximale à la puissance de sortie "P", dans une relation qui peut être écrite sous la forme :

$$P = \frac{1-\beta}{1+\beta} \frac{ZA.\omega.cos^2\Phi}{ZB\left(ZD(\omega_0^2-\omega^2)+\left(1+\frac{2}{\pi}\frac{1-\beta}{1+\beta}sin(2.\Phi)\right)\right)^2 + ZC\left(1+\frac{1-\beta}{1+\beta}cos^2\Phi\right)^2}$$

où :

   - ZA, ZB, ZC, ZD sont des constantes qui dépendent des propriétés électriques et mécaniques des composants, et
   - "$\omega$" est la fréquence angulaire de l'excitation cyclique effectivement reçue par le générateur piézoélectrique (Pz), et
   - "$\omega_0$" est la fréquence mécanique naturelle du générateur piézoélectrique ;

et où $\beta = 0$.

6. Procédé selon l'une quelconque des revendications précédentes, **caractérisé en ce que** l'étage de décharge est déclenché à un instant anticipé (t2') qui entre en vigueur avant un instant de franchissement du zéro (t2) auquel la tension d'entrée (V(t)) franchit zéro volt.

7. Procédé selon la revendication précédente, **caractérisé en ce que** le instant anticipé (t2') est choisi comme l'instant auquel la tension d'entrée (V(t)) atteint une tension d'interruption définie comme une fraction déterminée ($\beta$) de la valeur maximale ($V_M$) de ladite tension d'entrée.

8. Procédé selon la revendication précédente, **caractérisé en ce que** les valeurs du déphasage ($\Phi$) et de la fraction d'interruption ($\beta$) sont choisies en tant qu'ensemble des valeurs de "$\Phi$" et "$\beta$" qui donnent une valeur maximale à la puissance de sortie "P", dans une relation qui peut être écrite sous la forme :

$$P = \frac{1-\beta}{1+\beta} \frac{ZA.\omega.cos^2\Phi}{ZB\left(ZD(\omega_0^2-\omega^2)+\left(1+\frac{2}{\pi}\frac{1-\beta}{1+\beta}sin(2.\Phi)\right)\right)^2 + ZC\left(1+\frac{1-\beta}{1+\beta}cos^2\Phi\right)^2}$$

où :

   - ZA, ZB, ZC, ZD sont des constantes qui dépendent des propriétés électriques et mécaniques des composants, et

- "ω" est la fréquence angulaire de l'excitation cyclique effectivement reçue par le générateur piézoélectrique (Pz), et
- "ω₀" est la fréquence mécanique naturelle du générateur piézoélectrique, et
- β est la fraction, entre 1 et 0, de la tension d'entrée maximale ($V_M$) à laquelle l'instant anticipé (t2') d'interruption entre en vigueur.

9. Procédé de commande d'un circuit d'interface dans un circuit de récupération d'énergie, dans lequel
ledit circuit de récupération d'énergie comprend au moins un générateur piézoélectrique (Pz) agencé pour recevoir une énergie mécanique cyclique (X) et la convertir en une énergie électrique convertie cyclique (V),
ledit circuit d'interface est connecté fonctionnellement pour recevoir ladite énergie convertie électrique en tant que tension d'entrée cyclique (V, Vrect) et extraire au moins une partie d'énergie en tant que tension de sortie (Vout) adaptée pour être stockée dans un circuit de stockage (Cf),
ledit circuit d'interface comprenant au moins une bobine d'induction (L) et au moins un interrupteur électronique (T) commandé par un circuit de commande de manière à déclencher de manière alternative, lors d'un changement successif de son état :

- un étage de charge de la bobine d'induction à partir du générateur piézoélectrique, et
- un étage de décharge de la bobine d'induction vers le circuit de stockage ;

ledit procédé comprenant une commande dudit interrupteur électronique de manière à déclencher l'étage de décharge d'une manière synchronisée qui est calculée conformément à un instant de crête (t1), auquel une valeur maximale est atteinte par la valeur absolue de la tension d'entrée (V(t)), ou du déplacement (X(t)) du générateur piézoélectrique, ou de l'énergie convertie électrique produite par le générateur piézoélectrique,
dans lequel l'étage de décharge est déclenché à un instant anticipé (t2') qui entre en vigueur avant un instant de franchissement du zéro (t2) auquel la tension d'entrée (V(t)) franchit zéro volt, ledit instant anticipé (t2') étant choisi comme l'instant auquel la tension d'entrée (V(t)) atteint une tension d'interruption définie comme une fraction déterminée (β) de la valeur maximale ($V_M$) de ladite tension d'entrée,
ledit procédé étant **caractérisé en ce que** l'instant anticipé (t2') est calculé conformément à une valeur de la différence entre la fréquence d'une excitation cyclique réelle (ω) reçue par le générateur piézoélectrique (Pz) et la fréquence mécanique naturelle (ω₀) dudit générateur piézoélectrique.

10. Procédé selon la revendication précédente, **caractérisé en ce que** la tension d'interruption (β.$V_M$) est choisie par une des valeurs de "β" qui donnent une valeur maximale à la puissance de sortie "P", dans une relation qui peut être écrite sous la forme :

$$P = \frac{1-\beta}{1+\beta}\frac{ZA.\omega.cos^2\Phi}{ZB\left(ZD(\omega_0^2-\omega^2)+\left(1+\frac{2}{\pi}\frac{1-\beta}{1+\beta}sin(2.\Phi)\right)\right)^2 + ZC\left(1+\frac{1-\beta}{1+\beta}cos^2\Phi\right)^2}$$

où :

- ZA, ZB, ZC, ZD sont des constantes qui dépendent des propriétés électriques et mécaniques des composants, et
- "ω" est la fréquence angulaire de l'excitation cyclique effectivement reçue par le générateur piézoélectrique (Pz), et
- "ω₀" est la fréquence mécanique naturelle du générateur piézoélectrique, et
- β et la fraction, entre 1 et 0, de la tension d'entrée maximale ($V_M$) à laquelle l'instant anticipé (t2') d'interruption entre en vigueur ;

et où Φ=0.

11. Dispositif comprenant un circuit d'interface dans ou pour un dispositif de récupération d'énergie qui comprend au moins un générateur piézoélectrique (Pz) agencé pour recevoir une énergie mécanique cyclique (X) et la convertir en une énergie convertie électrique cyclique (V),
ledit circuit d'interface étant agencé pour recevoir ladite énergie convertie électrique en tant que tension d'entrée cyclique (V, Vrect) et extraire au moins une partie de ladite énergie comme tension de sortie (Vout) adaptée pour être stockée dans un circuit de stockage (Cf),

ledit circuit d'interface comprenant au moins une bobine d'induction (L) et au moins un interrupteur électronique (T) commandé par un circuit de commande de manière à déclencher de manière alternative, quand il change successivement d'état :

- un étage de charge de la bobine d'induction à partir du générateur piézoélectrique, et
- un étage de décharge de la bobine d'induction vers le circuit de stockage ;

dans lequel ledit circuit de commande est agencé, câblé physiquement et/ou programmé, pour commander ledit interrupteur électronique de manière à déclencher l'étage de décharge d'une manière synchronisée qui est calculée conformément un instant de crête (t1), auquel une valeur maximale est atteinte par la valeur absolue de la tension d'entrée (V(t)), ou du déplacement (X(t)) du générateur piézoélectrique, ou de l'énergie convertie électrique produite par le générateur piézoélectrique,

ledit dispositif étant **caractérisé en ce que** ledit circuit de commande est agencé, câblé physiquement et/ou programmé, pour mettre en œuvre un procédé selon l'une quelconque des revendications précédentes.

**12.** Dispositif selon la revendication précédente, **caractérisé en ce que** le circuit d'interface comprend au moins :

- un circuit redresseur, tel qu'un pont à diodes, qui est agencé et connecté fonctionnellement pour recevoir la tension d'entrée (V(t)) depuis le générateur piézoélectrique (Pz) en tant que tension de remplacement et produire à partir de celle-ci une tension redressée cyclique (Vrect),
- un circuit d'extraction, connecté fonctionnellement pour recevoir la tension redressée cyclique (Vrect) par le biais d'au moins deux bornes d'entrée et pour fournir une énergie électrique extraite de sortie par le biais d'au moins deux bornes de sortie,

dans lequel ledit circuit d'extraction comprend :

- au moins une bobine d'induction (L) connectée en parallèle entre lesdites bornes de sortie, et
- au moins un interrupteur électronique (T), tel qu'un transistor MOSFET, connecté fonctionnellement de manière à permettre ou à interrompre un courant de charge entre une borne d'entrée et une borne de sortie conformément à un circuit de commande.

**13.** Dispositif selon la revendication 11, **caractérisé en ce que** le circuit d'interface comprend au moins :

- un circuit redresseur, tel qu'un pont à diodes, qui est agencé et connecté fonctionnellement pour recevoir la tension d'entrée (V(t)) depuis le générateur piézoélectrique (Pz) en tant que tension de remplacement et produire à partir de celle-ci une tension redressée cyclique (Vrect),
- un circuit d'extraction, connecté fonctionnellement pour recevoir la tension redressée cyclique (Vrect) par le biais d'au moins deux bornes d'entrée et pour fournir une énergie électrique extraite de sortie par le biais d'au moins deux bornes de sortie,

dans lequel ledit circuit d'extraction comprend :

- au moins une bobine d'induction (L) couplée comportant

  ∘ au moins un enroulement primaire connecté en parallèle aux bornes d'entrée, et
  ∘ au moins un enroulement secondaire connecté en parallèle aux bornes de sortie ;

- au moins un interrupteur électronique (T), tel qu'un transistor MOSFET, connecté fonctionnellement de manière à permettre ou interrompre un courant de charge ($I_L$) entre une borne d'entrée et l'enroulement primaire de la bobine d'induction (L) couplée, conformément à un circuit de commande (VG).

**14.** Dispositif selon la revendication 11, **caractérisé en ce que** le circuit d'interface comprend au moins :

- un circuit redresseur, tel qu'un pont à diodes, qui est agencé et connecté fonctionnellement pour recevoir la tension d'entrée (V(t)) depuis le générateur piézoélectrique (Pz) en tant que tension de remplacement et produire à partir de celle-ci une tension redressée cyclique (Vrect),
- un circuit d'extraction, connecté fonctionnellement pour recevoir la tension redressée cyclique (Vrect) par le biais d'au moins une première et une deuxième bornes d'entrée et pour fournir une énergie électrique extraite de sortie par le biais d'au moins une première et une deuxième bornes de sortie, par exemple la deuxième borne d'entrée étant connectée à la deuxième borne de sortie,

dans lequel ledit circuit d'extraction comprend:

- au moins une bobine d'induction (L) connectée en série entre la première borne d'entrée et une borne intermédiaire,
- au moins un premier interrupteur électronique commandé (S1), connecté fonctionnellement de manière à permettre ou à interrompre le passage d'un courant entre ladite borne intermédiaire et la deuxième borne d'entrée, et
- au moins un deuxième interrupteur électronique commandé (S2), connecté fonctionnellement de manière à permettre ou à interrompre le passage d'un courant entre ladite borne intermédiaire et une première borne de sortie connectée à ladite bobine d'induction.

**Fig. 1a**
(prior art)

**Fig. 1b**
(prior art)

**Fig. 2**
(prior art)

**Fig. 3**
(prior art)

**Fig. 4**
(prior art)

SECE Interface

**Fig. 5**
(prior art)

**Fig. 6a**
(prior art)

**Fig. 6b**
(prior art)

**Fig. 7**

**Fig. 8**

**Fig. 9**

**Fig. 10**

**Fig. 11**

**Fig. 12a**

**Fig. 12b**

## Fig. 13

## Fig. 14

**Fig. 15a**

Normalized power

**Fig. 15b**

Optimal $\phi$

$Q_m=100,\ k^2=0{,}5\%$

**Fig. 16a**

Normalized power

**Fig. 16b**

Optimal $\phi$

$Q_m=100,\ k^2=1{,}6\%$

**Fig. 17a**

**Fig. 17b**

$$Q_m=100, k^2=2,4\%$$

**Fig. 18a**

**Fig. 18b**

$$Q_m=100, k^2=4,8\%$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2854006
- DE 102013105585

- EP 3035521 A1

### Non-patent literature cited in the description

- **LEFEUVRE et al.** piezoelectric ''energy harvesting device optimization by synchronous electric charge extraction. *Journal of Intelligent Material Systems and Structures,* 2005, vol. 16 (10), 865-876

- CMOS Circuits for Piezoelectric Energy Harvesters. **THORSTEN HEHN.** Advanced Microelectronics. Springer, 2015, vol. 38